# EUROPÄISCHE PATENTSCHRIFT

(11) **EP 2 675 695 B1**
(45) Veröffentlichungstag und Bekanntmachung des Hinweises auf die Patenterteilung: **19.08.2015**
(21) Anmeldenummer: 12707720.4
(22) Anmeldetag: 17.02.2012
(51) Int. Cl.: B62D 55/20, B62D 55/215

(54) **RAUPENSCHAKENKETTE FÜR EIN RAUPENFAHRWERK**
CONTINUOUS TRACK FOR A TRACKED CHASSIS
CHENILLE À MAILLONS POUR UN TRAIN DE ROULEMENT À CHENILLES

(30) Priorität: 18.02.2011 DE 102011011555
(43) Veröffentlichungstag der Anmeldung: 25.12.2013
(73) Patentinhaber: Simertis GmbH, 52074 Aachen (DE)
(72) Erfinder: HAUT, Holger, 52074 Aachen (DE); DIETRICH, Michael, 44229 Dortmund (DE)
(74) Vertreter: Müller, Karl-Ernst
(86) Internationale Anmeldenummer: PCT/EP2012/052776
(87) Internationale Veröffentlichungsnummer: WO 2012/110638

(56) Entgegenhaltungen:
- DE-A1- 4 421 001
- DE-A1- 4 444 982
- US-A1- 2009 058 182

## Beschreibung

Die Erfindung betrifft ein Raupenfahrwerk mit einer aus gegeneinander drehbar gekoppelten Bodenplatten bestehenden, endlosen und zu deren Antrieb über einen angetriebenen, wenigstens einen Nockenkranz aufweisenden Turas geführten Raupenschakenkette, wobei jede einzelne Bodenplatte jeweils wenigstens eine Höckerschake mit in Laufrichtung der Raupenschakenkette ausgerichteten Höckerschakenflanken aufweist und die Höckerschaken beim Umlauf der Raupenschakenkette über den Turas zum Eingriff in zwischen auf dem Umfang des Turas angeordneten, radial abstehenden Nocken ausgebildete Ausnehmungen eingerichtet sind.

Bekannte Raupenfahrwerke weisen allgemein jeweils eine an Turas und Raupenschakenkette ausgebildete zusätzliche Laufbahn zur Abstützung der Kettenglieder auf dem Turas auf, wobei sich der Turas entweder über die Stirnflächen der Turasnocken und/oder über eine an der Turasscheibe ausgebildete Umfangsfläche an an den Schaken ausgebildeten ebenen Flächen abstützt.

Ein Raupenfahrwerk mit den eingangs genannten Merkmalen ist aus der gattungsbildenden DE 44 44 982 A1 bekannt, wobei sich der Turas bei dieser Bauart des Raupenfahrwerks mit den Stirnflächen seiner Turasnocken an den Kettengliedern abstützt, so dass eine entsprechende Laufbahn gebildet ist.

Die zu dem bekannten Raupenfahrwerk gehörige Raupenkette ist als sogenannte Schakenkette ausgebildet, bei der auf den einzelnen Bodenplatten der Raupenkette jeweils eine Höckerschake (Schuh) mit in Laufrichtung der Raupenschakenkette ausgerichteten Höckerschakenflanken (Schuhnasen) angeordnet ist. Die einzelnen Bodenplatten sind dabei über ineinander greifende beziehungsweise überlappende Bereiche und darin eingreifende Bolzenverbindungen unmittelbar aneinander gekoppelt. Soweit die Raupenschakenkette zu ihrem Antrieb über einen angetriebenen Turas (Antriebstrommel) geführt ist, greifen die Schuhe in zwischen an der Antriebstrommel befestigten Trommelnasen (Turasnocken) bestehende Zwischenräume ein und werden bei Drehung der Antriebstrommel von den Trommelnasen mitgenommen. Bei dem bekannten Raupenfahrwerk sind zwei im Abstand zueinander angeordnete Turasse vorgesehen, denen jeweils im gleichen Abstand auf den Bodenplatten angeordnete Höckerschaken (Schuhe) zugeordnet sind. Die Trommelnasen wie auch die Schuhe weisen relativ steil stehende und jeweils einen bogenförmigen Verlauf aufweisende Schuhnaseneingriffsoberflächen beziehungsweise Schuhnasen auf, so dass jedenfalls bei einer gleichen Teilung von Schuhen und Trommelnasen ein formschlüssiger Eingriff von Schuhen und den zwischen den Trommelnasen bestehenden Zwischenräumen an der Antriebstrommel gegeben ist, so dass die Schuhe der Raupenschakenkette von den an zwei aufeinander folgenden Nocken ausgebildeten, einander gegenüberliegenden Schuhnaseneingriffsoberflächen der Trommeln erfasst und geschoben werden.

In der DE 44 44 982 A1 ist die bei derartigen Raupenfahrwerken auftretende Problematik erläutert, dass mit zunehmendem Betrieb eine verschleißbedingte Längung der Raupenschakenkette mit einer Vergrößerung von deren Teilung einhergeht. Dies führt bei dem beschriebenen Aufbau des Raupenfahrwerks zu einer Zwängung der einzelnen Schuhe in den Ausnehmungen der Antriebstrommel, so dass dadurch der Verschleiß sowohl an den Schuhen wie auch an den Trommelnasen verstärkt wird. Um hier die Möglichkeit zu schaffen, ohne eine vollständige Demontage des Raupenfahrwerks dessen Betriebsbereitschaft zu erhöhen, sind bei dem bekannten Raupenfahrwerk die Trommelnasen an der Antriebstrommel lösbar und mit einem einstellbaren radialen Abstand zur Antriebstrommel angeordnet, so dass durch eine Verschiebung der Trommelnasen radial nach außen der Abstand zwischen den Schuhnasenangriffsoberflächen der Trommelnasen vergrößert und damit an die Vergrößerung des Abstandes der Schuhnasen bei einer eintretenden Längung der Raupenschakenkette angepasst werden kann. Damit kann die von den Stirnflächen der Turasnocken bzw. Trommelnasen gebildete Laufbahn beibehalten werden.

Mit dem bekannten Raupenfahrwerk ist zunächst der Nachteil verbunden, dass bei Eintreten einer Kettenlängung eine Korrektur der Lage der Trommelnasen an dem Turas erfolgen muss, womit ein entsprechender Aufwand verbunden ist. Weiterhin ist mit der bekanten Maßnahme das Problem der Kettenzwängung beim Turaseingriff jedoch nicht grundlegend beseitigt, da aufgrund der unmittelbaren Verbolzung der einzelnen Bodenplatten miteinander eine einzelne Bodenplatte bei ihrem Umlauf über die Antriebstrommel sich nicht auf die Lage der Trommelnasen ausrichten kann, sondern in ihrer Stellung zur Antriebstrommel durch die Stellung der voreilenden wie auch der nachfolgenden Bodenplatte beeinflusst ist. So ist eine Schiefstellung der Bodenplatten mit den an ihnen angebrachten Schuhen nicht auszuschließen und kann auch im Falle eines Auftretens nicht ausgeglichen werden.

Aus der DE 44 21 001 A1 ist bereits ein Antriebssystem für eine Gleiskette bekannt, bei welchem der Turas beidseitig seiner zylindrisch ausgebildeten Antriebskörper außenliegende Umfangsflächen als Laufbahn für die Bodenplatten der Raupenschakenkette aufweist. Die Kettenglieder greifen mit an ihnen ausgebildeten dreieckförmigen Zähnen in die zwischen den zylindrischen Antriebskörpern bestehenden Ausnehmungen ein, so dass eine linienförmige Anlage der Antriebskörper an den Zahnflanken die Folge ist. Dabei sind die einzelnen Kettenglieder durch Verbindungslaschen miteinander verbunden, deren Befestigungen an den angeschlossenen Kettengliedern jeweils Drehachsen für das Einschwenken der beim Einlaufvorgang nacheinander jeweils in Eingriff mit den Antriebskörpern des Turas kommenden Zähne ausbilden. Bei dem bekannten Antriebssystem geht es darum, einem Verschleiß durch eine Reduzierung der auftretenden Schwingungen durch die Anordnung von Gummilagerungen für die Antriebskörper bzw. von Gummibandagen für die Laufflächen vorzubeugen. Das Verhalten der Kette bei einer eintretenden Kettenlängung ist nicht angesprochen.

In der DE 22 59 352 A ist weiterhin ein Kettenantrieb für Fahrzeuge beschrieben, bei welchem die Nocken des Turas und die Höckerschaken der Kettenglieder eine eckige Form mit gradlinig verlaufenden Nockenflanken und Höckerschakenflanken aufweisen, bei welchem sich jedoch wie bei dem in der DE 44 44 982 A1 beschriebenen Raupenfahrwerk eine zusätzliche Laufbahn durch ein Aufliegen der Stirnflächen der Turasnocken auf gesonderten, an den Schaken der Kettenglieder ausgebildeten Stützflächen ergibt, wobei die Nockenköpfe der Turasnocken auf einem zum Turas konzentrischen und die Laufbahn festlegenden Durchmesser enden. Da die Kraftübertragung durch die jeweils in Anlage aneinander kommenden Flächen von Turasnocken und Höckerschaken erfolgt, sind für Antrieb und Führung der Kette bei einem derartigen Kettenantrieb zwei geometrisch voneinander unabhängige Flächen erforderlich.

Der aus der US 2009/058182 A1 bekannte Kettenantrieb für Fahrzeuge umfasst eine Abfolge von Bodenplatten, wobei die jeweils benachbarten Bodenplatten mittels an ihnen festgeschraubter und über Bolzen drehbar aneinander gekoppelter Verbindungslaschen miteinander verbunden sind. Die Verbindungslaschen sind Träger von trapezförmigen Höckerschaken mit konisch sich nach außen verjüngenden Höckerschakenflanken, zwischen welche beim Umlauf der Bodenplatten über einen Antriebsturas die auf dessen Umfang angeordneten, ebenfalls trapezförmigen Turasnocken eingreifen.

Der Erfindung liegt die Aufgabe zugrunde, ein Raupenfahrwerk mit den eingangs genannten Merkmalen zur Verfügung zu stellen, bei welchem der Zustand einer Kettenzwängung beim Umlauf der Bodenplatten über den zugeordneten Turas vermieden und somit das Auftreten von Verschleiß an Turas und Höckerschaken der Bodenplatten vermindert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Bodenplatten mittels wenigstens einer zwischen ihnen angeordneten, eine Parallelverschiebung der Bodenplatten gegeneinander ermöglichenden Verbindungslasche aneinander gekoppelt sind und die Nocken und die Höckerschaken jeweils eine eckige Form mit geradlinig verlaufenden Nockenflanken und Höckerschakenflanken aufweisen derart, dass bei einem Umlauf der Raupenschakenkette über den Turas die vorauseilenden Nockenflanken aller in Eingriff mit den Höckerschaken befindlichen Nocken sich in allen Verschleißzuständen der Raupenschakenkette in flächiger Anlage an den Höckerschakenflanken befinden derart, dass eine laufflächenartige Abstützung der Raupenschakenkette auf dem Turas ausschließlich an den Nockenflanken und Höckerschakenflanken der beim Umlauf jeweils in Eingriff stehenden Nocken und Höckerschaken gegeben ist, und dass im Falle einer beanspruchungsbedingten Längung der Verbindungslaschen und damit einhergehender Vergrößerung der Teilung der Raupenschakenkette aufgrund der durch die wenigstens eine Verbindungslasche zugelassenen Parallelverschiebung von zwei benachbarten Bodenplatten die Höckerschakenflanken der in Eingriff mit dem Turas stehenden Höckerschaken beginnend mit der letzten in Eingriff befindlichen Höckerschake bis zur ersten in Eingriff gelangenden Höckerschake an den Nockenflanken der einzelnen aufeinander folgenden Nocken unter Aufrechterhaltung der Flächenanlage nach außen abgleiten, so dass die Mittelpunkte der jeweils wirksamen Kontaktflächen zwischen Höckerschaken und Nocken auf einer spiralförmigen Bahn um den Mittelpunkt des Turas liegen.

Damit ist mit der Erfindung erstmals das Bauprinzip eines Raupenfahrwerkes ohne eine zusätzliche Laufbahn verwirklicht, bei der nunmehr die Abstützung der Raupenschakenkette an dem Antriebsturas ausschließlich an den Nockenflanken und Höckerschakenflanken der beim Umlauf jeweils in Eingriff stehenden Nocken und Höckerschaken gegeben ist, weil einerseits die Nocken des Turas im Bereich der Verbindungslaschen zwischen die an den einzelnen Bodenplatten ausgebildeten Höckerschaken bzw. in die zwischen den Höckerschaken bestehenden Lücken eingreifen und andererseits die Höckerschaken an ihrem in die zwischen den Nocken des Turas bestehenden Ausnehmungen eingreifenden Stirnbereich so abgeflacht sind, dass sich keine stirnseitige Abstützung der Höckerschaken an dem Turas angibt. Somit ist die Ausbildung einer zusätzlich zur Flankenabstützung von Nocken und Höckerschaken bestehenden Laufbahn vermieden.

Mit der Erfindung ist insoweit der Vorteil verbunden, dass bei der erfindungsgemäß aus den Bodenplatten und den Verbindungslaschen als Kettengliedern aufgebauten Raupenschakenketten ein zusätzlicher Freiheitsgrad eingerichtet ist. Da aufgrund der Einschaltung der Verbindungslaschen zwischen den Bodenplatten neben der weiterhin gegebenen Drehbarkeit der Bodenplatten gegeneinander nun auch eine Parallelverschiebung der Bodenplatten gegeneinander ermöglicht ist, können bei dem Umlauf der erfindungsgemäß ausgebildeten Raupenschakenkette über einen zugeordneten Antriebsturas die Bodenplatten nun jeweils eine von der Lage der jeweils voreilenden und nachfolgenden Bodenplatte unabhängige Stellung auf dem Turasumfang einnehmen. In Verbindung damit ist den Nocken des Turas und den Höckerschaken jeweils eine eckige Form mit gradlinig verlaufenden Flanken gegeben, so dass die Höckerschaken mit ihren Höckerschakenflanken bei einer Veränderung ihrer Lage zum Turasumfang auf den Nockenflanken des Turas gleiten können, ohne dass eine flächige Anlage der aneinander anliegenden Flanken aufgegeben ist. Damit ist der Vorteil einer jeweils minimalen Flächenpressung verbunden. Aufgrund dieser Ausgestaltung ist weiterhin gewährleistet, dass auch bei einer sich verschleißbedingt vergrößernden Teilung der Raupenschakenkette die Flächenanlage aller jeweils in Eingriff mit dem Turas stehenden Höckerschaken aufrechterhalten bleibt, ohne dass Änderungen an dem Turas oder den Kettengliedern vorgenommen werden müssen. Insofern bleibt es in allen Verschleißzuständen der erfindungsgemäßen Raupenschakenkette bei einer Verteilung der zu übertragenden Antriebskraft auf eine Mehrzahl von jeweils in Eingriff mit dem Turas stehenden Kettengliedern in Form der an den Bodenplatten befestigten Höckerschaken.

Nach einem Ausführungsbeispiel kann hinsichtlich der Auslegung der Raupenschakenkette im Neuzustand vorgesehen sein, dass die Höckerschaken so weit in die zwischen den Turasnocken bestehenden Ausnehmungen eingreifen, dass im Neuzustand der Raupenschakenkette die zwischen zwei Nocken eingreifenden Höckerschaken einerseits an den vorauseilenden Nockenflanken anliegen und sich auf der gegenüberliegenden Seite wenigstens linienförmig an der gegenüberliegenden rückwärtigen Nockenflanke des in Drehrichtung benachbarten Nockens abstützen. Die Erfindung schließt dabei jedoch auch den Gedanken ein, dass im Neuzustand der Kette die Höckerschaken vollflächig mit ihren beiden Höckerschakenflanken an den Nockenflanken des Turas anliegen.

Um die Ausrichtung der einzelnen Bodenplatten beim Eingriff von deren Höckerschaken in den Nockenkranz des Turas zu verbessern, ist nach einem Ausführungsbeispiel der Erfindung vorgesehen, dass der Winkel der Höckerschakenflanken mit der Ebene der Bodenplatte zwischen 10 und 75 Grad beträgt; soweit ein derartig flacher Winkel generell beim Eingriff mit dem Turas eine Verschiebung der Bodenplatten gegenüber den Turasnocken erleichtert, versteht es sich, dass die Festlegung des Winkels durch die von dem Material sowie die auf die Raupenschakenkette einwirkenden Vorspann- und Antriebskräfte im Einzelfall abhängigen Reibungsverhältnisse bestimmt ist.

Die erfindungsgemäße Ausbildung der Raupenschakenkette ermöglicht zudem einen Kettenaufbau, bei welchem lediglich die verschlissenen Teile gewechselt werden müssen; es wird sich dabei in der Regel um die Verbindungslaschen handeln, die entsprechend zugänglich angeordnet sein können.

Hierzu ist nach einem ersten Ausführungsbeispiel der Erfindung vorgesehen, dass zwei Verbindungslaschen beidseitig der Höckerschaken von benachbarten Bodenplatten angeordnet sind, wobei vorgesehen sein kann, dass jede Verbindungslasche mit ihren endseitigen Bohrungen auf an den Höckerschaken angebrachten Bolzen aufgesetzt ist.

Bei einer Bauform einer Raupenschakenkette mit beidseitig der Höckerschaken angeordneten Führungsstegen kann entsprechend vorgesehen sein, dass die Bolzen zur Aufnahme der Verbindungslaschen an den Führungsstegen angeordnet sind.

Zur Stabilisierung der Lage und Bewegung der Verbindungslaschen bezüglich der daran angeschlossenen Bodenplatten kann vorgesehen sein, dass die Höckerschaken jeder Bodenplatte auf ihren beiden Seiten von Führungsstegen eingeschlossen sind und mit Abstand zu den beidseitigen Führungsstegen jeweils ein zusätzlicher Haltesteg auf der Bodenplatte angeordnet ist, wobei jeweils eine Verbindungslasche in dem Zwischenraum zwischen den Führungsstegen und den Haltestegen angeordnet und an in Haltestegen und Führungsstegen festgelegten Bolzen festgelegt ist.

Die erfindungsgemäße Ausgestaltung ist ebenfalls bei Raupenfahrwerken und Raupenschakenketten anwendbar, bei denen an dem Turas zwei deckungsgleich mit Abstand zueinander angeordnete Nockenkränze und auf den aneinander gekoppelten Bodenplatten zwei in gleichem, entsprechenden Abstand angeordnete Reihen von Höckerschaken vorgesehen sind, wie ein solcher Aufbau grundsätzlich aus der DE 10 2008 021 126 A1 bekannt ist, in welcher bei einem Turas die Ausbildung eines Mittelsteges zwischen zwei äußeren Nockenkränzen als Laufbahn für die Kettenglieder beschrieben ist. Im Rahmen einer solchen Ausgestaltung kann nach einem Ausführungsbeispiel der Erfindung vorgesehen sein, dass jeweils eine Verbindungslasche zwischen zwei Bodenplatten in dem zwischen den beiden Höckerschaken jeder Bodenplatte bestehenden Zwischenraum angeordnet ist, wobei die Höckerschaken jeweils Öffnungen zum Einsetzen der die Verbindungslasche durchgreifenden und damit tragenden Bolzen aufweisen. Bei einer derartigen Ausgestaltung der Raupenschakenkette kann nämlich auf einen in dem Abstand zwischen den beiden Nockenkränzen gelegenen und sich auf die Bodenplatten auflegenden Mittelsteg verzichtet werden, so dass in dem dadurch gewonnenen Freiraum die zugeordnete Verbindungslasche anzuordnen ist. Soweit bei der bekannten Ausgestaltung der Mittelsteg für eine zur Antriebsachse jeweils parallele Ausrichtung der Bodenplatten sorgt, geschieht erfindungsgemäß die Ausrichtung aufgrund der Flächenanlage der jeweils parallel auf einer Bodenplatte angeordneten Höckerschakenflanken an den zugeordneten Nockenflanken der beiden Nockenkränze.

In der Zeichnung sind Ausführungsbeispiele der Erfindung wiedergegeben, welche nachstehend beschrieben sind. Es zeigen:
- Fig. 1: einen einen Nockenkranz aufweisenden Antriebsturas für ein Raupenfahrwerk in einer Perspektivdarstellung,
- Fig. 2: drei mittels Verbindungslaschen aneinander gekoppelte Bodenplatten einer Raupenschakenkette mit auf den Bodenplatten angeordneten und von seitlichen Führungsstegen eingefassten Höckerschaken,
- Fig. 3: die der Teilung des Nockenkranzes entsprechende Raupenschakenkette in einer Ausgestaltung gemäß Figur 2 beim Umlauf über einen Turas gemäß Figur 1,
- Fig. 4: den Umlauf einer Raupenschakenkette gemäß Figur 3 mit einer einen Verschleiß zeigenden Raupenschakenkette,
- Fig. 5: die Raupenschakenkette gemäß Figur 3 in einer abgeänderten Ausführungsform,
- Fig. 6: einen Turas mit zwei im Abstand zueinander angeordneten Nockenkränzen in einer Perspektivdarstellung entsprechend Figur 2,
- Fig. 7: eine Mehrzahl von Bodenplatten einer zum Umlauf über einen Turas gemäß Figur 6 geeigneten Raupenschakenkette,

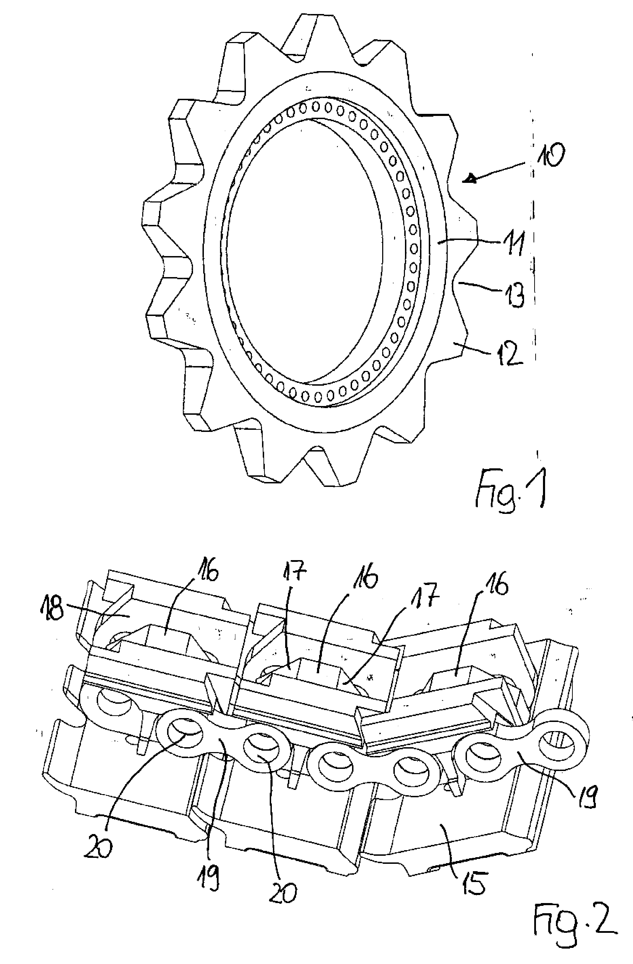

Der in Figur 1 dargestellte Antriebsturas 10 für die Raupenkette eines Fahrwerkes besteht aus einem sich über seinen Umfang erstreckenden Nockenkranz 11 mit radial abstehenden Nocken 12 und dazwischen gebildeten Ausnehmungen 13. Die Nocken 12 weisen eine eckige Form mit geradlinig verlaufenden Nockenflanken 14 auf, wobei die äußeren Nockenspitzen abgeflacht sind.

Wie sich aus Figur 2 ergibt, ist auf den Bodenplatten 15 einer zum Umlauf über einen Turas 10 gemäß Figur 1 bestimmten Raupenschakenkette jeweils eine Höckerschake 16 angebracht, die beiderseits in Laufrichtung der Raupenschakenkette ausgerichtete Höckerschakenflanken 17 aufweist, und die an ihrer Spitze ebenfalls abgeflacht sind. Jede Höckerschake 16 einer Bodenplatte 15 ist dabei seitlich von Führungsstegen 18 eingeschlossen, die auf der jeweiligen Bodenplatte 15 angebracht sind. Die einzelnen Bodenplatten 15 sind mittels Verbindungslaschen 19 gegeneinander drehbar gekoppelt, wobei die Verbindungslaschen 19 mit jeweils an ihren äußeren Enden angeordneten Bohrungen 20 außen auf an den seitlichen Führungsstegen 18 angebrachte, nicht dargestellte Bolzen aufschiebbar und daran festlegbar sind.

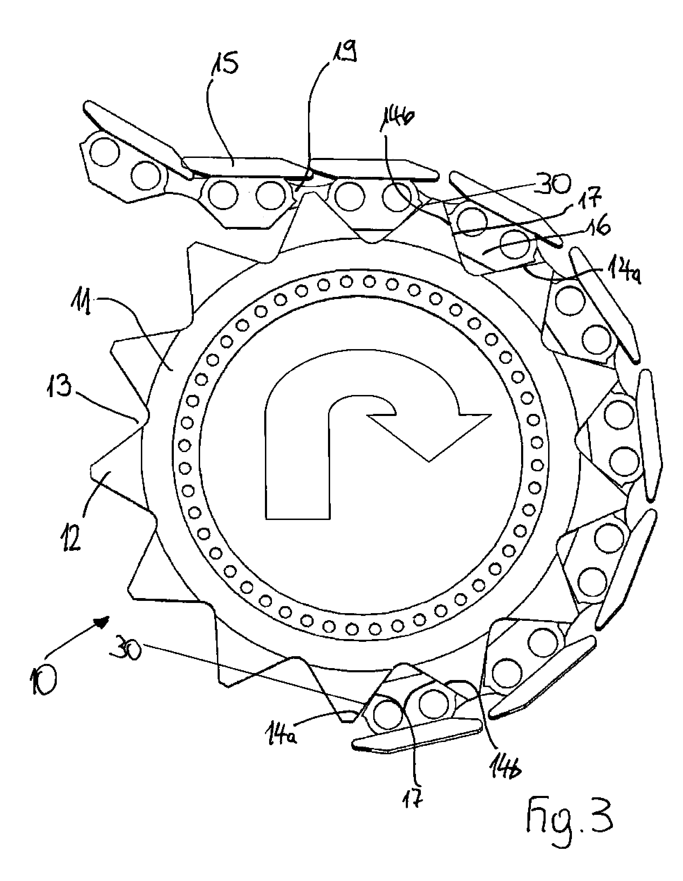

Befindet sich eine Raupenschakenkette mit entsprechend Figur 2 ausgebildeten und aneinander gekoppelten Bodenplatten 15 im Umlauf über einen in Figur 1 dargestellten Turas 10 mit Nockenkranz 11, so ist aus Figur 3 erkennbar, dass bei Drehung des Turas im Uhrzeigersinn die Höckerschakenflanken 17 aller in Eingriff mit den Nocken 12 stehenden Höckerschaken 16 jeweils in einem Flächenkontakt mit der vorauseilenden Nockenflanke 14a stehen, während sich auf der gegenüberliegenden Seite der Höckerschake 16 eine eher linienförmige Abstützung der zugeordneten Höckerschakenflanke 17 an der rückwärtigen Nockenflanke 14b des in Drehrichtung benachbarten Nockens 12 unter Ausbildung eines winkligen, sich radial nach außen öffnenden Spaltes 30 ergibt. Dieser Zustand stellt sich allerdings nur während eines Zeitraums ein, in welchem noch kein erkennbarer Verschleiß eingetreten ist, insoweit also die Teilung der Raupenschakenkette mit den mittels der Verbindungslaschen 19 aneinander gekoppelten Bodenplatten 15 mit der Teilung der an den Nockenkranz 11 befindlichen Nocken 12 übereinstimmt. Bei einer derartigen, lediglich linienförmigen Abstützung sind die Erfordernisse einer maßgenauen Fertigung reduziert, weil bei Fertigung der Kette in deren Neuzustand nicht auf einen passgenauen Eingriff der Höckerschaken in die Ausnehmungen des Turas abgestellt werden muss. Allerdings schließt die Erfindung einen derartigen passgenauen Eingriff aber auch nicht aus.

Aus Figur 3 lässt sich ferner entnehmen, dass einerseits die Nocken 12 des Turas 10 im Bereich der Verbindungslaschen 19 zwischen die an den einzelnen Bodenplatten 15 ausgebildeten Höckerschaken 16 bzw. in die zwischen den Höckerschaken 16 bestehenden Lücken eingreifen und andererseits die Höckerschaken 16 in ihrem in die zwischen den Nocken 12 des Turas 10 bestehenden Ausnehmungen 13 eingreifenden Stirnbereich so abgeflacht sind, dass sich keine stirnseitige Abstützung der Höckerschaken 16 an dem Turas 10 ergibt. Somit ist im Gegensatz zu aus dem Stand der Technik bekannten Raupenfahrwerken die Ausbildung einer zusätzlich zur Flankenabstützung zwischen Nocken 12 und Höckerschaken 16 bestehenden Laufbahn vermieden.

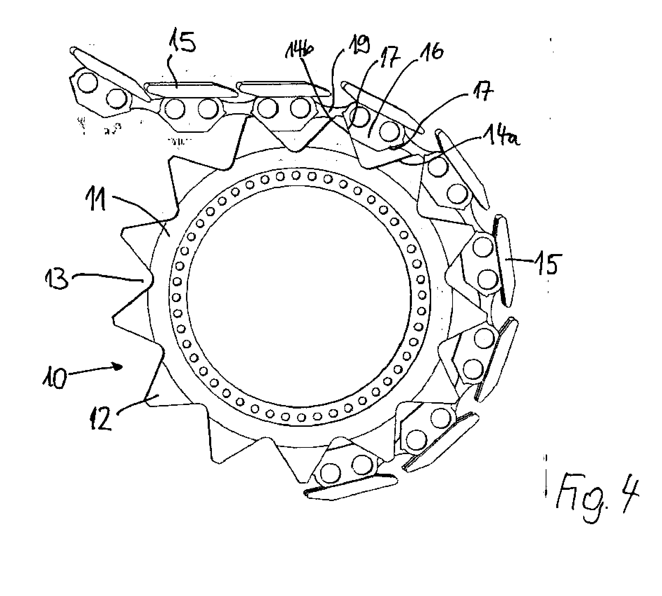

Kommt es nun zu einem Verschleiß des Raupenfahrwerks mit insbesondere einer Längung der Raupenschakenkette und dadurch eintretenden Vergrößerung von deren Teilung, stellt sich ein Zustand ein, wie er in Figur 4 dargestellt ist. Aufgrund der durch die Verbindungslaschen 19 zugelassenen Parallelverschiebung von zwei benachbarten Bodenplatten 15 gegeneinander rutschen die in dem Ausnehmungen 13 des Nockenkrantzes 11 liegenden Höckerschaken 16 ausgehend von der letzten noch in Eingriff mit dem Nockenkrantz 11 stehenden Höckerschake 16 in den entgegen der Drehrichtung nachfolgend angeordneten Ausnehmungen 13 bis zum Einlauf der ersten Höckerschake 16 in den Turas 10 jeweils weiter radial nach außen so dass sich die zugeordneten Höckerschakenflanken 17 von den vorauseilenden Nockenflanken 14a abheben, jedoch mit den in Drehrichtung des Turas 10 den Antrieb der Bodenplatten 15 ausführenden schiebenden Nockenflanken 14b der Nocken 12 in Eingriff bleiben, ohne dass damit aber eine Zwängung des Höckerschakereingriffs in der Ausnehmung eintritt. Da dies für sämtliche in Eingriff mit den Ausnehmungen 13 des Nockenkranzes 11 stehenden Höckerschaken 16 der im Umlauf stehenden Bodenplatten 15 gilt, ist die Flächenpressung im Bereich jeder einzelnen Höckerschake 16 und jedes einzelnen Nockens 12 verringert, so dass die Kraftübertragung verbessert ist.

Der Aufbau der Raupenschakenkette gemäß Figur 2 ermöglicht es, nach Erreichen eines vorbestimmten Verschleißzustandes lediglich die Verbindungslaschen 19 zu wechseln und damit die Raupenschakenkette in einen entsprechenden "Neuzustand" zu versetzen.

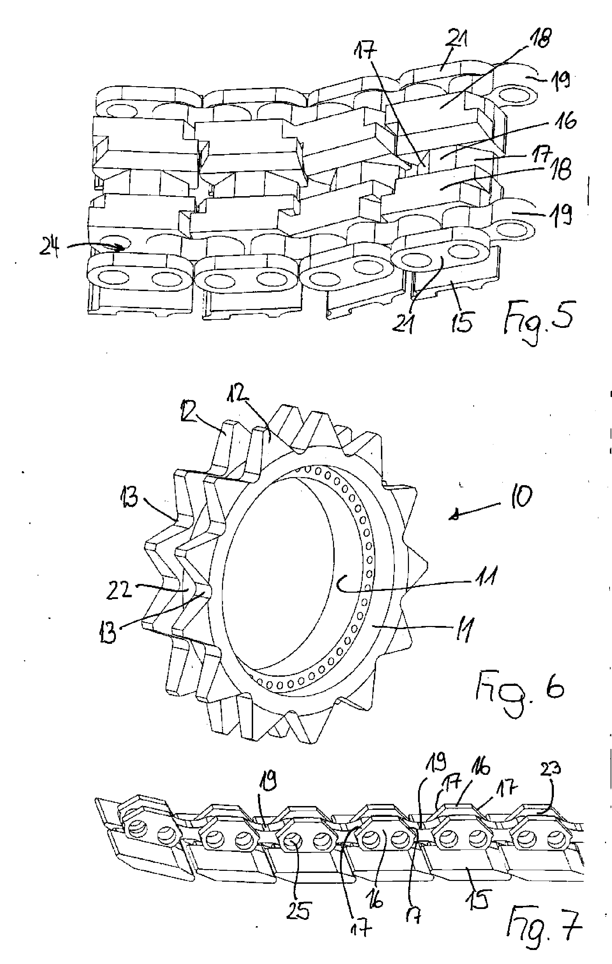

Bei dem in Figur 5 dargestellten Ausführungsbeispiel sind zusätzlich zu den die Höckerschaken 16 jeder Bodenplatte 15 einfassenden Führungsstegen 18 mit Abstand dazu angeordnete Haltestege 21 auf jeder Bodenplatte 15 angebracht, wobei die Verbindungslaschen 19 nun jeweils in dem Zwischenraum 24 zwischen dem jeweiligen Führungssteg 18 und dem zugeordneten Haltesteg 21 angeordnet und entsprechend an in den Haltestegen 21 und den Führungsstegen 18 festgelegten, im Einzelnen nicht dargestellten Bolzen festgelegt sind.

In den Figuren 6 und 7 ist ein Ausführungsbeispiel der Erfindung wiedergegeben, bei welchem der Antriebsturas 10 zwei mit Abstand zueinander angeordnete deckungsgleiche Nockenkränze 11 mit einem zwischen den Nockenkränzen 11 ausgebildeten Abstand 22 aufweist (Figur 6).

Entsprechend sind auf den in Figur 7 dargestellten Bodenplatten 15 einer zugeordneten Raupenschakenkette jeweils zwei mit einem dem Abstand 22 zwischen den Nockenkränzen 11 entsprechenden Abstand angeordnete Höckerschaken 16 befestigt, die beim Umlauf über den in Figur 6 dargestellten Turas 10 (vgl. auch Figur 4) jeweils gleichzeitig in die an den beiden Nockenkränzen 11 ausgebildeten Ausnehmungen 13 eingreifen. In diesem Fall ist der zwischen den Höckerschaken 16 gegebene Zwischenraum 23 zur Anordnung der Verbindungslaschen 19 genutzt, wobei in den Höckerschaken 16 jeweils Bohrungen 25 ausgebildet sind, in denen die Verbindungslaschen 19 festlegende Bolzen eingesetzt sind (nicht dargestellt). Soweit sich bei einem Umlauf der aus Figur 7 ersichtlichen Raupenschakenkette über einen in Figur 6 dargestellten Turas 10 aufgrund der jeweiligen Flächenanlage eine parallele Ausrichtung der auf einer Bodenplatte 15 angeordneten Höckerschakenflanken 17 an den zugeordneten Nockenflanken 14 der beiden Nockenkränze 11 ergibt, benötigt der Antriebsturas 10 keine zusätzliche Lauffläche zur Übertragung von Vertikalkräften, wie diese im Stand der Technik gemäß der gattungsbildenden DE 10 2008 021 126 A1 mit der dort vorgesehenen Anordnung eines Mittelsteges verwirklicht ist.

## Patentansprüche

1. Raupenfahrwerk mit einer aus gegeneinander drehbar gekoppelten Bodenplatten (15) bestehenden, endlosen und zu deren Antrieb über einen angetriebenen, wenigstens einen Nockenkranz (11) aufweisenden Turas (10) geführten Raupenschakenkette, wobei jede einzelne Bodenplatte (15) jeweils wenigstens eine Höckerschake (16) mit in Laufrichtung der Raupenschakenkette ausgerichteten Höckerschakenflanken (17) aufweist und die Höckerschaken (16) beim Umlauf der Raupenschakenkette über den Turas (10) zum Eingriff in zwischen auf dem Umfang des Turas (10) angeordneten, radial abstehenden Nocken (12) ausgebildete Ausnehmungen (13) eingerichtet sind, **dadurch gekennzeichnet, dass** die Bodenplatten (15) mittels wenigstens einer zwischen ihnen angeordneten, eine Parallelverschiebung der Bodenplatten (15) gegeneinander ermöglichenden Verbindungslasche (19) aneinander gekoppelt sind und die Nocken (12) und die Höckerschaken (16) jeweils eine eckige Form mit geradlinig verlaufenden Nockenflanken (14) und Höckerschakenflanken (17) aufweisen derart, dass bei einem Umlauf der Raupenschakenkette über den Turas (10) die vorauseilenden Nockenflanken (14) aller in Eingriff mit den Höckerschaken (16) befindlichen Nocken (12) sich in allen Verschleißzuständen der Raupenschakenkette in flächiger Anlage an den Höckerschakenflanken (17) befinden derart, dass eine laufflächenartige Abstützung der Raupenschakenkette auf dem Turas (10) ausschließlich an den Nockenflanken (14) und Höckerschakenflanken (17) der beim Umlauf jeweils in Eingriff stehenden Nocken (12) und Höckerschaken (16) gegeben ist, und dass im Falle einer beanspruchungsbedingten Längung der Verbindungslaschen (19) und damit einhergehender Vergrößerung der Teilung der Raupenschakenkette aufgrund der durch die wenigstens eine Verbindungslasche (19) zugelassenen Parallelverschiebung von zwei benachbarten Bodenplatten (15) die Höckerschakenflanken (17) der in Eingriff mit dem Turas (10) stehenden Höckerschaken (16) beginnend mit der letzten in Eingriff befindlichen Höckerschake bis zur ersten in Eingriff gelangenden Höckerschake an den Nockenflanken (14) der einzelnen aufeinander folgenden Nocken (12) unter Aufrechterhaltung der Flächenanlage nach außen abgleiten, so dass die Mittelpunkte der jeweils wirksamen Kontaktflächen zwischen Höckerschaken (16) und Nocken (12) auf einer spiralförmigen Bahn um den Mittelpunkt des Turas (10) liegen.

2. Raupenfahrwerk nach Anspruch 1, **dadurch gekennzeichnet, dass** im Neuzustand der Raupenschakenkette die zwischen zwei Nocken (12) eingreifenden Höckerschaken (16) einerseits an den vorauseilenden Nockenflanken (14b) anliegen und sich auf der gegenüberliegenden Seite wenigstens linienförmig an der gegenüberliegenden rückwärtigen Nockenflanke (14a) des in Drehrichtung benachbarten Nockens (12) abstützen.

3. Raupenfahrwerk nach Anspruch 1 oder 2, **dadurch gekennzeichnet, dass** der Winkel der Höckerschakenflanken (17) mit der Ebene der Bodenplatte (15) zwischen 10 Grad und 75 Grad beträgt und im Einzelnen durch die von den durch das Material sowie die auf die Raupenschakenkette einwirkenden Vorspann- und Antriebskräfte vorgegebenen Reibungsverhältnisse bestimmt ist.

4. Raupenfahrwerk nach einem der Ansprüche 1 bis 3, **dadurch gekennzeichnet, dass** zwei Verbindungslaschen (19) beidseitig der Höckerschaken (16) von benachbarten Bodenplatten (15) angeordnet sind.

5. Raupenfahrwerk nach einem der Ansprüche 1 bis 4, **dadurch gekennzeichnet, dass** jede Verbindungslasche (19) mit ihren endseitigen Bohrungen (20) auf an den Höckerschaken (16) angebrachten Bolzen aufgesetzt ist.

6. Raupenfahrwerk nach Anspruch 4 oder 5, **dadurch gekennzeichnet, dass** die Höckerschaken (16) jeder Bodenplatte (15) auf ihren beiden Seiten von Führungsstegen (18) eingeschlossen sind und die Bolzen zur Aufnahme der Verbindungslaschen (19) an den Führungsstegen (18) angeordnet sind.

7. Raupenfahrwerk nach einem der Ansprüche 1 bis 5, **dadurch gekennzeichnet, dass** die Höckerschaken (16) jeder Bodenplatte (15) auf ihren beiden Seiten von Führungsstegen (18) eingeschlossen sind und mit Abstand zu den beidseitigen Führungsstegen (18) jeweils ein zusätzlicher Haltesteg (21) auf der Bodenplatte (15) angeordnet ist, wobei jeweils eine Verbindungslasche (19) in dem Zwischenraum (24) zwischen den Führungsstegen (18) und den Haltestegen (21) angeordnet und an in Haltestegen (21) und Führungsstegen (18) festgelegten Bolzen festgelegt ist.

8. Raupenfahrwerk nach einem der Ansprüche 1 bis 5, wobei an dem Turas zwei deckungsgleich mit Abstand zueinander angeordnete Nockenkränze und auf den aneinander gekoppelten Bodenplatten zwei im gleichen Abstand angeordnete Reihen von Höckerschaken vorgesehen sind, **dadurch gekennzeichnet, dass** jeweils eine Verbindungslasche (19) zwischen zwei Bodenplatten (15) in dem zwischen den beiden Höckerschaken (16) jeder Bodenplatte (15) bestehenden Zwischenraum (23) angeordnet sind, wobei die Höckerschaken (16) jeweils Öffnungen (25) zum Einsetzen der die Verbindungslasche (19) durchgreifenden Bolzen aufweisen.

## Claims

1. A tracked chassis comprising a continuous track that comprises ground plates (15) coupled so as to be rotatable to each other and which is guided by means of a driven sprocket (10) having at least one toothed ring (11) in order to drive the continuous track, wherein each individual ground plate (15) has at least one hump link (16) with hump link flanks (17) oriented in the running direction of the continuous track, and wherein the hump links (16) are designed to engage in recesses (13) formed between radially protruding teeth (12) arranged on the circumference of the sprocket (10) while the continuous track circulates over the sprocket (10), **characterized in that** the ground plates (15) are coupled to each other by means of at least one connecting sideplate (19) which is arranged between the ground plates and which allows the ground plates (15) to shift in parallel relative to each other and the teeth (12) and the hump links (16) respectively have an angular shape with linearly extending teeth flanks (14) and hump link flanks (17) such that the leading teeth flanks (14) of all teeth (12) engaged with the hump links (16) flatly contact the hump link flanks (17) in all states of wear while the continuous track circulates over the sprocket (10), namely in such a way that a running surface-like support of the continuous track on the sprocket (10) only occurs on the teeth flanks (14) and the hump link flanks (17) of the respectively engaged teeth (12) and hump links (16) during the circulating of the continuous track, and **in that**, in case of a wear-related elongation of the connecting sideplates (19) and a corresponding increase in the pitch of the continuous track as a result of the at least one elongated connecting sideplate (19) allowing a parallel displacement of two adjacent ground plates (15), the hump link flanks (17) of the hump links (16) engaged with the sprocket (10) slide oufinrard on the teeth flanks (14) of the individual successive teeth (12) while maintaining the surface contact, namely from the last engaged hump link to the first hump link being engaged, such that the centers of the respectively effective contact surfaces between the hump links (16) and the teeth (12) lie on a spiral-shaped path around the center of the sprocket (10).

2. Tracked chassis according to Claim 1, **characterized in that** the hump links (16) engaging between two teeth (12) on the one hand contact the leading teeth flanks (14b) and are on the other hand at least linearly supported on the opposing rear teeth flanks (14a) of the rotationally adjacent teeth (12) on the opposite side in the new condition of the continuous track.

3. Tracked chassis according to Claim 1 or 2, **characterized in that** the angle between the hump link flanks (17) and the plane of the ground plate (15) lies between 10 and 75 degrees and is in each individual instance defined by the frictional conditions that depend on the material, as well as the prestressing and driving forces acting upon the continuous track.

4. Tracked chassis according to one of Claims 1 to 3, **characterized in that** two connecting sideplates (19) are arranged to both sides of the hump link (16) of adjacent ground plates (15).

5. Tracked chassis according to one of Claims 1 to 4, **characterized in that** each connecting sideplate (19) is attached to bolts arranged on the hump link (16) by means of bores (20) on their respective ends.

6. Tracked chassis according to Claim 4 or 5, **characterized in that** the hump links (16) of each ground plate (15) are enclosed by guide webs (18) on both of their sides and the bolts for receiving the connecting sideplates (19) are arranged on the guide webs (18).

7. Tracked chassis according to one of Claims 1 to 5, **characterized in that** the hump links (16) of each ground plate (15) are enclosed by guide webs (18) on both of their sides and an additional holding web (21) is respectively arranged on the ground plates (15) at a distance from the two guide webs (18), wherein a connecting sideplate (19) is respectively arranged in the intermediate space (24) between the guide webs (18) and the holding webs (21) and is fixed on bolts that are fixed in holding webs (21) and guide webs (18).

8. Tracked chassis according to one of Claims 1 to 5, wherein two toothed rings are congruently arranged on the sprocket at a distance from one another and two rows of hump links that are spaced apart by the same distance are provided on the interconnected ground plates, **characterized in that** a connecting sideplate (19) is respectively arranged between two ground plates (15) in the intermediate space (23) between the two hump links (16) of each ground plate (15), wherein the hump links (16) respectively contain openings (25) for inserting the bolts that extend through the connecting sideplate (19).

## Revendications

1. Train de roulement à chenilles avec une chenille à maillons sans fin, composée de plaques de sol (15) accouplées de manière à tourner les unes par rapport aux autres et guidée pour son entraînement par l'intermédiaire d'un barbotin (10) entraîné comportant au moins une couronne à cames (11), chaque plaque de sol individuelle (15) présentant au moins un maillon à bosse (16) pourvu de flancs de maillon à bosse (17) orientés dans le sens de la marche de la chenille à maillons et les maillons à bosse (16) étant conçus pour s'engager dans des évidements (13) formés entre des cames (12) radialement en saillie, disposées sur le pourtour du barbotin (10) lorsque la chenille à maillons tourne sur le barbotin (10), **caractérisé en ce que** les plaques de sol (15) sont accouplées les unes aux autres au moyen au moins d'une bride de liaison (19) disposée entre elles, permettant un déplacement parallèle des plaques de sol (15) les unes par rapport aux autres et les cames (12) et les maillons à bosse (16) présentent respectivement une forme angulaire avec des flancs de came (14) et des flancs de maillon à bosse (17) passant en ligne droite de telle sorte que lorsque la chenille à maillons tourne sur le barbotin (10), les flancs de came (14) se pressant en avant de toutes les cames (12) se trouvant en prise avec les maillons à bosse (16) reposent dans tous les états d'usure de la chenille à maillons à plat contre les flancs de maillon à bosse (17) de sorte qu'un appui du type surface de roulement de la chenille à maillons est constitué sur le barbotin (10) exclusivement sur les flancs de came (14) et les flancs de maillon à bosse (17) des cames (12) et maillons à bosse (16) se trouvent respectivement engagés lors de la révolution et **en ce qu'**en cas d'un allongement conditionné par la charge des brides de liaison (19) et de ce fait d'une augmentation se produisant du pas de la chenille à maillons en raison d'un déplacement parallèle admis par au moins une bride de liaison (19) de deux plaques de sol voisines (15), les flancs de maillon à bosse (17) des maillons à bosse (16) se trouvant en prise avec le barbotin (10) en commençant avec le dernier maillon à bosse se trouvant en prise jusqu'au premier maillon à bosse parvenu en prise glissent vers l'extérieur sur les flancs de came (14) des cames individuelles se succédant (12) en maintenant le repos à plat de sorte que les centres des surfaces de contact respectivement actives se situent entre les maillons à bosse (16) et les cames (12) sur une trajectoire en spirale autour du centre du barbotin (10) .

2. Train de roulement à chenilles selon la revendication 1 **caractérisé en ce que** dans le nouvel état de la chenille à maillons, les maillons à bosse (16) en prise entre deux cames (12) portent d'un côté sur les flancs de came (14b) se pressant en avant et s'appuient sur le côté opposé au moins de façon linéaire sur le flanc de came (14a) arrière opposé de la came voisine (12) dans le sens de rotation.

3. Train de roulement à chenilles selon la revendication 1 ou 2 **caractérisé en ce que** l'angle des flancs de maillon à bosse (17) avec le plan de la plaque de sol (15) se situe entre 10 degrés et 75 degrés et est déterminé en particulier par les rapports de frottement prédéfinis par le matériau ainsi que par les forces de précontrainte et d'entraînement agissant sur la chenille à maillons.

4. Train de roulement à chenilles selon l'une quelconque des revendications 1 à 3 **caractérisé en ce que** deux brides de liaison (19) sont disposées des deux côtés des maillons à bosse (16) des plaques de sol voisines (15).

5. Train de roulement à chenilles selon l'une quelconque des revendications 1 à 4 **caractérisé en ce que** chaque bride de liaison (19) est placée avec ses alésages d'extrémité (20) sur un boulon monté sur les maillons à bosse (16).

6. Train de roulement à chenilles selon la revendication 4 ou 5 **caractérisé en ce que** les maillons à bosse (16) de chaque plaque de sol (15) sont contenus sur les deux côtés des dents de guidage (18) et les boulons sont disposés sur les dents de guidage (18) pour recevoir les brides de liaison (19).

7. Train de roulement à chenilles selon l'une quelconque des revendications 1 à 5 **caractérisé en ce que** les maillons à bosse (16) de chaque plaque de sol (15) sont contenus sur leurs deux côtés des dents de guidage (18) et qu'à chaque fois une dent de retenue supplémentaire (21) est disposée sur la plaque de sol (15) à distance des dents de guidage bilatérales (18), une bride de liaison (19) étant respectivement disposée dans l'espace intermédiaire (24) entre les dents de guidage (18) et les dents de retenue (21) et fixée sur les boulons fixés dans les dents de retenue (21) et les dents de guidage (18).

8. Train de roulement à chenilles selon l'une quelconque des revendications 1 à 5 pour lequel sur le barbotin sont prévues deux couronnes à cames de couverture identique disposées à distance l'une de l'autre et sur les plaques de sol accouplées les unes aux autres deux séries de maillons à bosse disposées à distance identique, **caractérisé en ce qu'**à chaque fois une bride de liaison (19) entre deux plaques de sol (15) est disposée dans l'espace intermédiaire (23) existant entre les deux maillons à bosse (16) de chaque plaque de sol (15), les maillons à bosse (16) comportant respectivement des ouvertures (25) pour introduire les boulons traversant la bride de liaison (19).
